# EUROPÄISCHE PATENTSCHRIFT

(11) **EP 0 981 102 B1**
(45) Veröffentlichungstag und Bekanntmachung des Hinweises auf die Patenterteilung: **18.09.2002**
(21) Anmeldenummer: 99100640.4
(22) Anmeldetag: 14.01.1999
(51) Int. Cl.: G06K 7/00

(54) **Vorrichtung und Verfahren zum Auslesen und Beschreiben von mindestens zwei Transpondertypen**
Device and method enabling reading and writing onto at least two transponder types
Dispositif et méthode permettant la lecture et l'écriture d'au moins 2 types de transpondeurs

(30) Priorität: 20.08.1998 DE 19837894
(43) Veröffentlichungstag der Anmeldung: 23.02.2000
(73) Patentinhaber: MOBA-Mobile Automation GmbH, 65604 Elz (DE)
(72) Erfinder: Schmidt, Andreas, 01309 Dresden (DE); Süss, Matthias, 01309 Dresden (DE)
(74) Vertreter: Schoppe, Fritz, Dipl.-Ing.

(56) Entgegenhaltungen:
- EP-A- 0 709 803
- EP-A- 0 768 540
- WO-A-99/46722
- DE-A- 19 635 311

## Beschreibung

Die vorliegende Erfindung bezieht sich auf das Gebiet der Transpondertechnik und insbesondere auf das Auslesen und Beschreiben von mindestens zwei Transpondertypen, denen unterschiedliche Datenübertragungsprotokolle zugeordnet sind.

Transponder sind Sende/Empfangs-Geräte, die üblicherweise ohne eigene Energieversorgung auskommen. Transponder werden über ein elektromagnetisches Hochfrequenzfeld angesprochen und beziehen ihre Betriebsenergie durch Gleichrichtung des Hochfrequenzfeldes. Sie sind üblicherweise konfiguriert, um ansprechend auf ein bestimmtes Empfangssignal eine bestimmte Funktion auszuführen. Diese Funktion kann beispielsweise darin bestehen, daß sie wiederum eine ihnen zugeordnete Identifikationskennung aussenden, daß sie einen ihnen zugeordneten Speicher beschreiben, oder daß sie irgendein anderes Signal aussenden, das wiederum von einem Empfänger empfangen werden kann und demselben Kenntnis über eine bestimmte Eigenschaft des Transponders verschafft.

In jüngster Zeit haben sich sehr preisgünstige Transponder auf dem Markt verbreitet, die beispielsweise in Etiketten eingearbeitet werden können, um einen Gegenstand zu identifizieren, auf dem das Etikett angeordnet bzw. aufgeklebt ist. Hier ist beispielsweise an die Postverteilung zu denken. Auf Paketen ist zwar eine für den Menschen lesbare Adresse aufgeklebt, die eigentliche Verteilung kann jedoch mittels eines in diesem Etikett untergebrachten Transponders durchgeführt werden, der durch ein geeignetes Schreib/Lesegerät angesprochen werden kann. Ein solches Etikett mit einem elektronischen Transponder ist dann hinfällig, wenn das Paket ausgeliefert worden ist und das Etikett gewissermaßen zerbrochen wird. Solche Transponder müssen sehr preisgünstig sein, da sie gewissermaßen Einwegartikel sind.

Bei dem dargestellten Postverteilungsszenario kann ein auf einem Paket aufgebrachter Transponder zu Anfang initialisiert werden, um beispielsweise durch seine Seriennummer auf ein spezielles Paket hinzuweisen. Alternativ könnte der Transponder auf eine bestimmte Frage-Datensequenz die Bestimmungsadresse des Pakets ausgeben. Ein solches Paket wird, wenn es bei einem Postamt abgegeben wird, über mehrere Verteilerstellen bis zu dem Adressaten laufen. Als Beispiel für ein Beschreiben des Transponders könnte der über die Etikette dem Paket zugeordnete Transponder bei jeder Verteilungsstelle mit einem bestimmten Code beschrieben werden, um den Weg des Pakets nachzuverfolgen. Ein Beispiel für das Beschreiben eines Transponders ist selbstverständlich auch die Anfangsinitialisierung, d. h. die ursprüngliche Eingabe der Zieladresse.

In einer Paketverteilungsstelle laufen sehr viele mit Transpondern bestückte Pakete auf einem Förderband. Eine Schreib/Lesevorrichtung kann die Transponder der einzelnen Pakete aktivieren, um ihre Zieladresse zu ermitteln, um dieselben von dem Hauptförderband weg geeignet zu verteilen.

Solche Transponder werden hauptsächlich als Identifikationssysteme verwendet. Überall, wo bestimmte Gegenstände automatisch identifiziert werden sollen, können derartige preisgünstige Identifikations-Transponder, z. B. in Etiketten eingesetzt, eingesetzt werden.

Heutzutage existieren bereits Identifikationssysteme auf Transponderbasis, von denen beispielsweise das Transpondersystem unter der Marke "Tag-it" von Texas Instruments und zum anderen das Transponderidentifikationssystem mit der Markenbezeichnung "I-Code" von Philips zu nennen sind. Neben der Transponder-Hardware, die in ein Etikett eingebaut ist, sind verschiedene Transponder-Identifikationssysteme durch ihre jeweiligen Datenübertragungsprotokolle definiert. Üblicherweise umfassen solche Datenübertragungsprotokolle spezielle Modulationsarten, Codierungsarten und Signalworte. Weiterhin umfassen solche Datenübertragungsprotokolle einen bestimmten Kommunikationswortschatz, der beispielsweise eine Frage-Datensequenz umfaßt, durch die eine Kommunikation zwischen einer Schreib/Lesevorrichtung und einem Transponder eingeleitet werden kann. Üblicherweise antwortet jeder Transponder auf eine solche Frage-Datensequenz mit einer Antwort-Datensequenz, die mehr oder weniger Informationen über den Transponder enthalten kann.

Schon allein aus wettbewerbsrechtlichen Gründen ist es untersagt, daß lediglich ein einziges Transponder-Identifikationssystem in einem bestimmten Markt ausschließlich verwendet wird. So können neben den beiden genannten Identifikationssystemen, die von unterschiedlichen Herstellern angeboten werden, durchaus weitere vorhanden sein. Wenn wieder an die Postverteilung gedacht wird, dürfte es auch aus wettbewerbsrechtlichen Gründen untersagt sein, daß lediglich einem Anbieter von Transponder-Identifikationssystemen der Zugang zum Paketmarkt erlaubt wird.

Bisher existieren jedoch lediglich Schreib/Lesevorrichtungen, die auf einen einzigen Transpondertyp ausgelegt sind, d. h. die nur ein Datenübertragungsprotokoll beherrschen. Solche Schreib/Lesegeräte zum Auslesen eines einzigen Transpondertyps werden z. B. von den Herstellern der Transponder-Identifikationssysteme angeboten. Am Beispiel der Postverteilung wird jedoch deutlich, daß, wenn Postpakete mit Etiketten beklebt sind, die unterschiedliche Transpondertypen aufweisen, das Kommunizieren mit zwei unterschiedlichen Transpondertypen lediglich manuell bzw. überhaupt nicht möglich ist. Dies läuft einer in diesem Bereich absolut notwendigen Automatisierung entgegen.

Die DE 196 35 311 A1 offenbart eine adaptive Identifikation kontaktloser Chipkarten. Ein Terminal sendet zur Identifikation unterschiedlicher Chipkarten in zeitlicher Folge verschiedene codierte Signalsequenzen aus, wobei jede Signalsequenz zur Identifikation einer Chipkarte vorgesehen ist. Zwischen den codierten Signalsequenzen befinden sich Antwortzeitfenster, in denen der Terminal nichts aussendet und bereit ist, von den Chipkarten ausgegebene Signale zu empfangen. Eine zu identifizierende Chipkarte empfängt die nacheinander ausgesendeten codierten Signalsequenzen und vergleicht dieselben mit einer in der Chipkarte gespeicherten Sequenz. Stellt die zu identifizierende Chipkarte fest, daß eine der vom Terminal gesendeten codierten Signalsequenzen mit der in derselben gespeicherten Signalsequenz übereinstimmt, so sendet eine Chipkarte ein auf den Sendemodus des Terminals synchronisiertes Signal ab. Die Synchronisation ist derart beschaffen, daß die Chipkarte in dem Antwortzeitfenster, das der codierten Signalsequenz, die mit der auf der Chipkarte gespeicherten Sequenz übereinstimmt, folgt, ein Signal von der Karte zum Terminal gesendet wird. Der Terminal identifiziert die Chipkarte somit dadurch, daß er aufgrund des zeitlichen Zusammenhangs zwischen dem Antwortzeitfenster und der vorausgehenden codierten Signalsequenz feststellt, mit welcher Chipkarte er kommuniziert.

Die EP 0 768 540 A1 bezieht sich auf ein Transpondersystem mit einem Lesegerät, das Transponder unter Verwendung unterschiedlicher Protokolle anspricht. Das Lesegerät umfaßt einen Sender, eine Antenne, einen Empfänger und eine Steuerungseinheit. Verschiedene Transponder können ein unterschiedliches Übertragungsprotokoll haben, wobei jedem Übertragungsprotokoll ein anderes Erregungssignal zugeordnet ist. Wenn ein Transponder das für sein Datenübertragungsprotokoll geeignete Erregungssignal empfängt, wird von dem Transponder zum Lesegerät ein Signal übermittelt. Wenn dagegen das Erregungssignal vom Lesegerät nicht dem Übertragungsprotokoll des Transponders entspricht, wird vom Transponder kein Signal zum Lesegerät übermittelt. Die Identifikation der Transponder wird derart durchgeführt, daß das Lesegerät ein Erregungssignal sendet und dann hört, ob ein Transponder darauf antwortet. Wird vom Lesegerät kein Antwortsignal empfangen, so wird ein anderes Erregungssignal ausgesendet, wonach das Lesegerät jeweils hört, ob ein Transponder auf das andere Erregungssignal antwortet.

Die nachveröffentlichte WO 99/46722 offenbart Verfahren, Systeme und Vorrichtungen zum Übertragen von Daten zwischen Universallesegeräten und Transpondern, denen unterschiedliche Kommunikationsprotokolle zugeordnet sind. Die Kommunikationsprotokolle unterscheiden sich durch unterschiedliche Modulationsverfahren. Der Universalleser sucht nach den Transpondern, denen unterschiedliche Modulationsverfahren zugeordnet sind, durch Emittieren eines Untersuchungssignals, das die verschiedenen Modulationsverfahren umfaßt, die den verschiedenen Tranpondertypen zugeordnet sind. Jeder Transponder, der das Untersuchungssignal empfängt, erzeugt ein Echosignal gemäß seinem eigenen speziellen Protokoll. Das Universallesegerät analysiert jedes Echosignal und leitet daraus das spezifische Protokoll ab, das dem Transponder zugeordnet ist, der das betreffende Echosignal ausgegeben hat. Das Universallesegerät kommuniziert dann mit einem Tranponder unter Verwendung des Kommunikationsprotokolls, das diesem Transponder zugeordnet ist.

Die Aufgabe der vorliegenden Erfindung besteht darin, ein Konzept zum Auslesen und Beschreiben von mindestens zwei Transpondertypen zu schaffen, denen unterschiedliche Datenübertragungsprotokolle zugeordnet sind, um in einer Einheit verschiedene Transpondertypen sicher und zuverlässig handhaben zu können.

Diese Aufgabe wird durch eine Vorrichtung gemäß Anspruch 1 und durch ein Verfahren gemäß Anspruch 9 gelöst.

Der vorliegenden Erfindung liegt die Erkenntnis zugrunde, daß zum Handhaben von unterschiedlichen Transpondertypen, denen unterschiedliche Datenübertragungsprotokolle zugeordnet sind, ein einziges Gerät notwendig ist, das auf automatische Art und Weise mit jedem Transpondertyp kommunizieren kann. Damit kann das Ziel der Automatisierung erreicht werden, da ein Benutzer dann keine Kenntnis über verschiedene Transpondertypen, Datenübertragungsprotokolle und ähnliches haben muß. Nur dann kann auch Personal, das nicht speziell mit Transpondertypen und Datenübertragungsprotokollen vertraut ist, entsprechende Anlagen bedienen bzw. überwachen. Dies ist besonders wichtig, da die Transpondertypen und besonders die Datenübertragungsprotokolle relativ kompliziert sind, und da das Personal, das üblicherweise beispielsweise zum Paketverteilen eingesetzt wird, in elektronischen und hochfrequenztechnischen Fragen eher inkompetent sein wird.

Eine erfindungsgemäße Vorrichtung umfaßt einen Sendespeicher zum Speichern einer Frage-Datensequenz für jeden Transpondertyp, durch die eine Kommunikation mit dem entsprechenden Transpondertyp eingeleitet werden kann. Die Vorrichtung umfaßt ferner eine Sendeeinrichtung zum Senden der gespeicherten Frage-Datensequenz für jeden Transpondertyp, eine Empfangseinrichtung zum Empfangen von Signalen, die von Transpondertypen abgeschickt worden sind, um eine empfangene Antwort-Datensequenz zu erhalten. Schließlich umfaßt eine erfindungsgemäße Vorrichtung eine Bestimmungseinrichtung zum Bestimmen des Transpondertyps durch Auswerten der empfangenen Antwort-Datensequenz.

Bei einem bevorzugten Ausführungsbeispiel der vorliegenden Erfindung antwortet ein Transponder nur auf eine Frage-Datensequenz für den Transpondertyp, dem der Transponder zugeordnet ist. Transponder anderer Typen schweigen auf eine solche Frage-Datensequenz. In diesem Fall ist die Bestimmungseinrichtung derart angeordnet, daß sie den Transpondertyp des antwortenden Transponders bestimmt, indem sie ermittelt, welchem Transpondertyp das Datenübertragungsprotokoll zugeordnet ist, aus dem die eben abgesendete Frage-Datensequenz stammte.

Alternativ kann es vorkommen, daß bei bestimmten Transpondertypen die entsprechenden Transponder irgendein Signal abgeben, obwohl die Frage-Datensequenz nicht für diese Typen bestimmt war. In einem solchen Fall umfaßt die erfindungsgemäße Vorrichtung ferner eine Speichereinrichtung zum Speichern von erwarteten Antwort-Datensequenzen sowie eine Vergleichseinrichtung, um ein empfangenes Signal mit den abgespeicherten Erwartungs-Antwort-Datensequenzen zu vergleichen. Wenn eine Übereinstimmung gefunden worden ist, kann die Bestimmungseinrichtung aufgrund des in der Vergleichseinrichtung durchgeführten Vergleichs bestimmen, ob eine empfangene Antwort-Datensequenz eine gültige Antwort-Datensequenz ist, und welchem Datenübertragungsprotokoll, d. h. welchem Transpondertyp, diese Antwort-Datensequenz zugeordnet ist.

Zusammenfassend kann eine Transpondertypbestimmung aufgrund einer empfangenen Antwort-Datensequenz durchgeführt werden. Dies kann zum einen dadurch geschehen, daß die empfangene Antwort-Datensequenz mit der entsprechenden vorausgehenden Frage-Datensequenz, deren zugeordneter Transpondertyp bekannt ist, in Beziehung gesetzt wird, oder daß eine empfangene Antwort-Datensequenz mit einzelnen gespeicherten Erwartungs-Antwort-Datensequenzen verglichen wird.

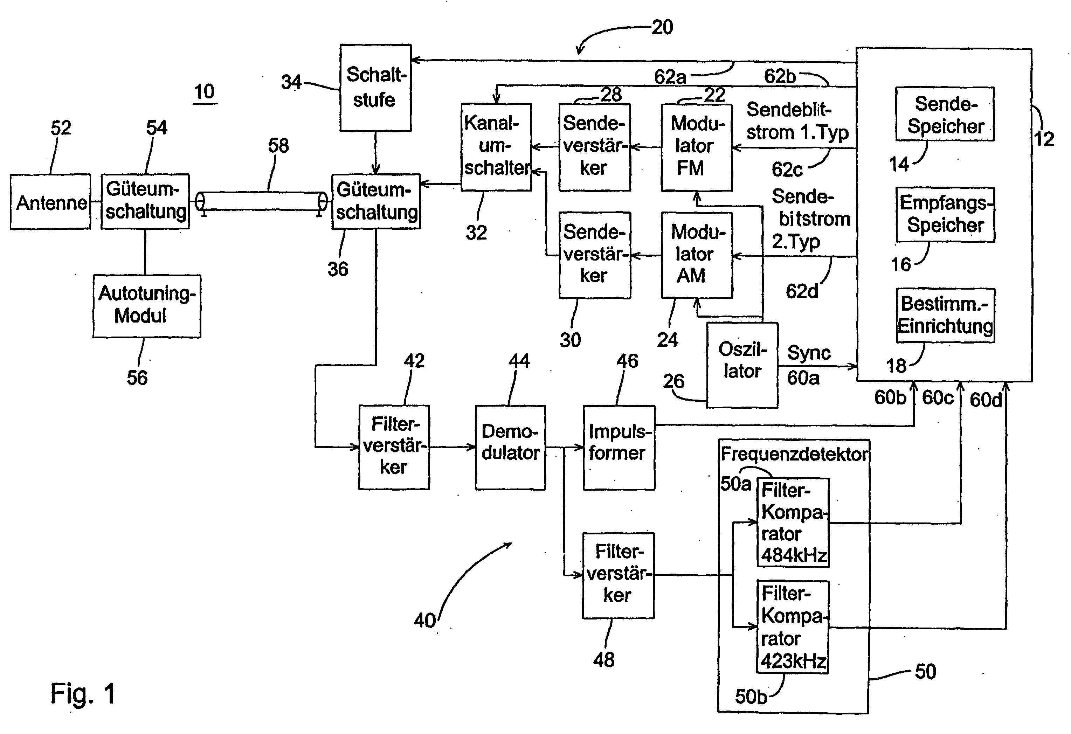

Bevorzugte Ausführungsbeispiele der vorliegenden Erfindung werden nachfolgend bezugnehmend auf die beiliegende Figur detailliert erläutert, die ein schematisches Blockschaltbild einer erfindungsgemäßen Vorrichtung zeigt.

Die Figur- zeigt ein Übersichts-Blockschaltbild für eine erfindungsgemäße Vorrichtung 10 zum Auslesen und Beschreiben von mindestens zwei Transpondertypen, die unterschiedlichen Datenübertragungsprotokollen zugeordnet sind. Die Vorrichtung 10 umfaßt im einzelnen eine Auswerteelektronik 12, die entweder softwaremäßig mittels einer Mikrosteuerung oder auch in Hardware oder selbstverständlich in einer Kombination dieser beiden Möglichkeiten ausgeführt sein kann. Die Auswerteelektronik 12 umfaßt einen Sendespeicher 14, einen Empfangsspeicher 16 und eine Bestimmungseinrichtung 18. Im Sendespeicher 14 ist für jeden Transpondertyp, für den die Vorrichtung 10 ausgelegt ist, eine Frage-Datensequenz gespeichert, durch die eine Kommunikation mit dem entsprechenden Transpondertyp eingeleitet werden kann. Wenn die Vorrichtung 10 daher für zwei unterschiedliche Transpondertypen wie in dem in der Figur gezeigten Beispiel ausgelegt ist, so wird der Sendespeicher 14 zumindest zwei unterschiedliche Frage-Datensequenzen speichern, wobei eine Frage-Datensequenz aus dem Datenübertragungsprotokoll ist, das dem ersten Transpondertyp zugeordnet ist, während eine weitere Frage-Datensequenz aus dem Datenübertragungsprotokoll ist, dem die zweite Frage-Datensequenz zugeordnet ist. Der lediglich vorzugsweise vorhandene Empfangsspeicher speichert Erwartungs-Antwort-Datensequenzen für jeden Transpondertyp. Diese Erwartungs-Antwort-Datensequenzen werden als Reaktion eines Transponders auf eine entsprechende Frage-Datensequenz erwartet.

Die Bestimmungseinrichtung 18 führt dann letztendlich die Bestimmung durch, aufgrund welches Datenübertragungsprotokolls mit einem antwortenden Transponder kommuniziert werden soll, d. h. welchen Typs der antwortende Transponder ist. Die erfindungsgemäße Vorrichtung 10 umfaßt ferner eine Sendeeinrichtung 20, die mehrere Elemente umfaßt. Elemente der Sendeeinrichtung 20 sind beispielsweise ein FM-Modulator 22, ein AM-Modulator 24, ein Oszillator 26 für die Modulatoren, Sendeverstärker 28, 30 für jeden Modulator, einen Kanalumschalter 32, einen Gleichstrom/Gleichstrom-Wandler 34, und eine Güteumschaltungsstufe, die gleichzeitig eine 50-Ohm-Anpassung für nachgeschaltete HF-Komponenten festlegt, wobei der letztgenannte Block mit dem Bezugszeichen 36 in der Figur versehen ist.

Die Vorrichtung 10 umfaßt ferner eine Empfangseinrichtung 40, die einen Filterverstärker 42, einen Demodulator 44, einen Impulsformer 46, einen Filterverstärker 48 und einen Frequenzdetektor 50 umfaßt, der bei einem bevorzugten Ausführungsbeispiel der vorliegenden Erfindung abhängig von den vorhandenen Transpondertypen zwei Filterkomparatoren 50a und 50b bei unterschiedlichen Frequenzen umfaßt. Die Sendeeinrichtung und die Empfangseinrichtung haben beide eine Antenne 52, eine Stufe 54, die ähnlich zur Stufe 36 eine Güteumschaltung und eine 50-Ohm-Anpassung realisieren kann, und ein Autotuning-Modul 56 gemeinsam, um die Antenne 52 über eine Übertragungsleitung 58, die vorzugsweise als Koaxialkabel ausgeführt ist, mit einem modulierten HF-Signal versorgen zu können.

Wie es aus der Figur ersichtlich ist, ist die erfindungsgemäße Vorrichtung 10 auf zwei unterschiedliche Transpondertypen, denen zwei unterschiedliche Datenübertragungsprotokolle zugeordnet sind, ausgelegt. Die beiden Transpondertypen haben jedoch eine Gemeinsamkeit. Diese Gemeinsamkeit besteht darin, daß die Trägerfrequenz die Frequenz 13,56 MHz ist. Diese Frequenz ist vom Bundesamt für Post und Telekommunikation in der Bundesrepublik Deutschland bzw. weltweit durch entsprechende nationale Behörden für Funkdienste kleiner Leistung freigegeben worden. Daher werden im wesentlichen alle entsprechenden Transponder-Identifikationssysteme bei einer solchen Trägerfrequenz arbeiten. Für solche Systeme bietet sich für eine Modulation mit Unterträgern die Frequenz 423,75 kHz an, da diese durch einen Teiler 32 aus der weltweit verfügbaren Trägerfrequenz bei 13,56 MHz abgeleitet werden kann. Daher wird der Oszillator 26 für die beiden Modulatoren 22 und 24 bei der Frequenz 13,56 MHz arbeiten. Soll die erfindungsgemäße Vorrichtung 10 jedoch für Transpondertypen geeignet sein, die bei unterschiedlichen Trägerfrequenzen arbeiten, was selbstverständlich nicht ausgeschlossen ist, so müßte der Oszillator 26 beispielsweise als abstimmbarer Oszillator ausgeführt sein, der von der Auswerteelektronik 12 aus gesteuert wird, und der in Abhängigkeit von der zu sendenden Frage-Datensequenz abgestimmt wird und mit dem entsprechenden Modulator 22 oder 24 gekoppelt wird.

Die Auswerteelektronik umfaßt mehrere Eingänge 60a bis 60d, wobei der Eingang 60a ein Synchronisationseingang ist, was zeigt, daß die Auswerteelektronik 12 durch den Oszillator 26, der beim bevorzugten Ausführungsbeispiel der vorliegenden Erfindung eine Frequenz von 13,56 MHz hat, synchronisiert wird. Für Fachleute ist es offensichtlich, daß die Auswerteelektronik 12, wenn sie bei einer niedrigeren Frequenz arbeitet, entsprechende Teiler haben wird, um nötige Taktfrequenzen zu liefern, oder entsprechende Multiplizierer, wenn sie bei einer höheren Frequenz als 13,56 MHz arbeiten soll.

Der Eingang 60b in die Auswerteelektronik 12 trägt eine empfangene Antwort-Datensequenz, die mittels der Empfangseinrichtung 40 nach Empfang durch die Antenne 52 und nach entsprechender Demodulation im Demodulator 44 aus einem an der Antenne empfangenen Signal bestimmt worden ist.

Die Eingänge 60c und 60d in die Auswerteelektronik 12 dienen der Antikollisionserkennung. Sie umfassen Signale bei unterschiedlichen NF-Frequenzen. Die Antikollisionserkennung ist dann erforderlich, wenn mehrere Transponder des gleichen Typs im Empfangsbereich der Vorrichtung 10 sind, und auf eine Frage-Datensequenz mehr oder weniger parallel eine Antwort-Datensequenz absenden. In diesem Fall ist eine durch die Datenübertragungsprotokolle festgelegte Datenkommunikation mittels entsprechender Pulszüge und Codierungen notwendig, um nur noch mit jedem einzelnen Transponder des gleichen Typs kommunizieren zu können.

Die Auswerteelektronik 12 umfaßt ferner mehrere Ausgänge 62a bis 62d, wobei der Ausgang 62a ein Schaltstufe 34 ansteuert, um eine Antennengütenumschaltung und eine Anpassung bereitzustellen. Es existieren verschiedene Möglichkeiten der elektronischen Anpassung, beispielsweise über abstimmbare elektronische Dämpfungsglieder. Der Ausgang 62b der Auswerteelektronik ist mit dem Kanalumschalter 32 verbunden, derart, daß von der Auswerteelektronik 12 gesteuert werden kann, welches Modulatorausgangssignal durch die Antenne 52 abgestrahlt werden soll. Der Ausgang 62c liefert schließlich Sendebitströme für den ersten Transpondertyp, d. h. Datensequenzen gemäß dem Datenübertragungsprotokoll, das dem ersten Transpondertyp zugeordnet ist. In Analogie dazu liefert der Ausgang 62d Sendebitströme für den zweiten Transpondertyp, d. h. Datensequenzen, die gemäß dem zweiten Datenübertragungsprotokoll gestaltet sind. An den Ausgängen 62c und 62d werden von der Auswerteelektronik 12 daher Frage-Datensequenzen ausgegeben, während empfangene Antwort-Datensequenzen über den Eingang 60b in die Auswerteelektronik 12 eingespeist werden.

Bevor auf die Funktion der erfindungsgemäßen Vorrichtung 10 eingegangen wird, seien zunächst die beiden Datenübertragungsprotokolle bzw. Transpondertypen erwähnt, für die das bevorzugte Ausführungsbeispiel der vorliegenden Erfindung ausgestaltet ist. Die eingangs erwähnten Datenübertragungsprotokolle haben gemeinsam, daß sie bei der gleichen, weltweit freigegebenen Trägerfrequenz von 13,56 MHz arbeiten. Sie unterscheiden sich jedoch durch die Modulationsart, was in der Figur durch den FM-Modulator 22 für den ersten Transpondertyp und durch den AM-Modulator 24 für den zweiten Transpondertyp zum Ausdruck gebracht wird. Unterschiedliche Codierungsarten und digitale Signalverarbeitungen, die in den beiden Datenübertragungsprotokollen erforderlich sind, um die Sendebitströme an den Ausgängen 62c und 62d zu erzeugen, sind in der Auswerteelektronik 12 implementiert. Die Einzelheiten der Datenübertragungsprotokolle sind jedoch für die vorliegende Erfindung nicht von Bedeutung. Dieselben sind jedoch in der Auswerteelektronik 12 implementiert, um entsprechende Sendebitströme erzeugen zu können, und um entsprechende Empfangsbitströme verstehen zu können. Eine weitere Bedingung, die durch unterschiedliche Transpondertypen auferlegt werden kann, ist die erforderliche. Antennengüte zum Senden bzw. Empfangen. Dieser aufgrund unterschiedlicher Transpondertypen bzw. unterschiedlicher Datenübertragungsprotokolle erforderliche Punkt wird durch die Stufen 36 und 54 berücksichtigt, die neben der Güteumschaltung auch die notwendige Anpassung vorzugsweise an 50 Ohm liefern, um Reflexionsverluste in der Vorrichtung 10 möglichst gering zu halten.

Im nachfolgenden wird auf die Funktion der erfindungsgemäßen Vorrichtung 10 eingegangen. Zunächst sei der Zustand betrachtet, daß die Vorrichtung 10 ermitteln möchte, welche Transponder sich in ihrer Umgebung befinden. Die Transponder in ihrer Umgebung können Transponder des ersten oder des zweiten Typs sein. Selbstverständlich kann das erfindungsgemäße Konzept auf beliebig viele Transpondertypen erweitert werden. Wenn beispielsweise zwei Transponder die gleiche Modulationsart (FM, AM und ähnliches) verwenden, könnte selbstverständlich auf den entsprechenden anderen Modulator 22 oder 24 verzichtet werden, da immer nur nach einem Datenübertragungsprotokoll kommuniziert wird, und nicht über zwei oder mehrere Datenübertragungsprotokolle gleichzeitig.

Um zu ermitteln, ob sich Transponder eines bestimmten Typs in der Nähe der vorrichtung 10 befinden, wird die erfindungsgemäße Vorrichtung 10 aus dem Sendespeicher 14 eine Frage-Datensequenz für den ersten Transpondertyp auslesen und an dem Ausgang 62c ausgeben, entsprechend modulieren und über die Antenne 52 absenden. Existiert in Reichweite des Funkübertragungskanals ein Transponder, der diese Frage-Datensequenz, die beispielsweise darin bestehen könnte, daß jeder Transponder seine Seriennummer zurücksendet, versteht, so wird der angesprochene Transponder eine Antwort-Datensequenz absenden, die von der Antenne 52 der erfindungsgemäßen Vorrichtung 10 als Empfangssignal empfangen wird und am Eingang 60b der Auswerteelektronik 12 als empfangene Antwort-Datensequenz vorliegt. Wenn die beiden Transpondertypen derart ausgestaltet sind, daß sie nur antworten, wenn sie mit genau der passenden Frage-Datensequenz angesprochen worden sind, so weiß die erfindungsgemäße Vorrichtung 10 schon allein aufgrund der Tatsache, daß ein Transponder auf eine Frage-Datensequenz gemäß einem ersten Datenübertragungsprotokoll geantwortet hat, daß der antwortende Transponder vom ersten Typ ist.

Es könnte jedoch auch der Fall auftreten, daß Transponder, die einem Datenübertragungsprotokoll gehorchen, das nicht von dem Typ ist, dem die abgesendete Frage-Datensequenz zugeordnet ist, antworten. Dann muß die erfindungsgemäße Vorrichtung 10 die empfangene Antwort-Datensequenz am Eingang 60b mit einer erwarteten Antwort-Datensequenz, die in dem Empfangsspeicher 16 abgelegt ist, in der Bestimmungseinrichtung 18 vergleichen, um zu ermitteln, ob es sich hier um eine gültige Antwort-Datensequenz handelt, die dem Datenübertragungsprotokoll entspricht, dem auch die abgesendete Frage-Datensequenz zugeordnet ist. Verläuft diese Überprüfung positiv, so wird eine Kommunikation mit dem entsprechenden Transponder des ersten Typs über das erste Datenübertragungsprotokoll fortgesetzt, um erwünschte Funktionen, wie z. B. ein weiteres Auslesen des Transponders oder ein Beschreiben des Transponders, durchzuführen.

Liegt kein Transponder des ersten Typs vor, d. h. wird keine Antwort-Datensequenz empfangen bzw. nur eine ungültige Antwort-Datensequenz, so wird die erfindungsgemäße Vorrichtung 10 aus dem Sendespeicher 14 eine Frage-Datensequenz wiedergewinnen und absenden, die dem Datenübertragungsprotokoll gehorcht, das dem zweiten Transpondertyp zugeordnet ist. Daraufhin werden die in Zusammenhang mit dem ersten Transpondertyp beschriebenen Vorgänge in der Bestimmungseinrichtung 18 wiederholt, bis dann eine Kommunikation auf der Basis des Datenübertragungsprotokolls durchgeführt wird, das dem zweiten Transpondertyp zugeordnet ist.

Obwohl gegenwärtig verwendete Transponder-Identifikationssysteme nur antworten, wenn sie mit einer speziellen Frage-Datensequenz angesprochen werden, und sogar schweigen, wenn sie mit einem unmodulierten HF-Träger bei 13,56 MHz angesprochen werden, könnte es dennoch jetzt oder in Zukunft Transpondersysteme geben, die auch irgendetwas abstrahlen, wenn sie unkorrekt angesprochen werden. In diesem Fall wird die durch die Bestimmungseinrichtung 18 in Verbindung mit dem Empfangsspeicher 16 implementierte Vergleichsoperation besonders vorteilhaft sein. Ansonsten wird das Datenübertragungsprotokoll daraus bestimmt, daß auf eine bestimmte Frage-Datensequenz, deren zugrundeliegendes Datenübertragungsprotokoll bekannt ist, eine empfangene Antwort-Datensequenz erhalten wird.

Die erfindungsgemäße Vorrichtung 10 erlaubt es somit, daß zumindest zwei oder mehrere Transponderarten mittels eines einzigen Geräts beschrieben und gelesen werden können. Durch den universellen Einsatz der erfindungsgemäßen Vorrichtung beispielsweise an Etikettendruckern, Tunnellesern und dergleichen, erschließen sich für die Anwender solcher Identifikationssysteme diverse Vorteile, die im wesentlichen in Kosteneinsparungen für das Sendegerät im Vergleich zur parallelen Implementation beider Geräte bestehen, da viele Komponenten gemeinsam verwendet werden können. Ein weiterer Vorteil besteht darin, daß sich ein Benutzer nicht mehr darum kümmern muß, welche Transpondertypen auftreten können, wenn er alle möglichen bzw. alle überhaupt erwarteten Transpondertypen in der Vorrichtung 10 implementiert hat. Die Vorrichtung 10 erlaubt damit eine aufeinanderfolgende automatische Kommunikation mit Transpondern völlig unterschiedlicher Typen.

Wesentliche Baugruppen des in der einzigen Figur gezeigten Blockschaltbilds, wie z. B. Sendeverstärker, Modulatoren, Demodulatoren usw., können gemeinsam verwendet werden, wobei insbesondere die Tatsache vorteilhaft ist, daß die derzeit verfügbaren Identifikationssysteme auf der gleichen international freigegebenen Frequenz arbeiten. Damit ist nur ein Oszillator notwendig. Selbstverständlich könnte jedoch, falls andere Trägerfrequenzen aufkommen sollten, dieser Oszillator durch einen weiteren Oszillator ergänzt werden oder abstimmbar gemacht werden. Aufgrund der durch die vorliegende Erfindung gelieferten erheblichen Flexibilität sind auch die geringen Kosten für eine zusätzliche Schaltungshardware hier vernachlässigbar.

## Patentansprüche

1. Vorrichtung (10) zum Auslesen und Beschreiben von Transpondern mindestens zweier Transpondertypen, denen unterschiedliche Datenübertragungsprotokolle zugeordnet sind, mit folgenden Merkmalen:
einem Sendespeicher (14) zum Speichern einer Frage-Datensequenz für jeden Transpondertyp, durch die eine Kommunikation mit einem Transponder des entsprechenden Transpondertyps eingeleitet werden kann;
einer Sendeeinrichtung (20) zum Senden der gespeicherten Frage-Datensequenz für jeden Transpondertyp;
einem Empfangsspeicher (16) zum Speichern einer erwarteten Antwort-Datensequenz für jeden Transpondertyp, die ein Transponder eines Transpondertyps als Reaktion auf die diesem Typ zugeordnete Frage-Datensequenz erwartungsgemäß absenden wird;
einer Empfangseinrichtung (40) zum Empfangen von Signalen, die von einem Transponder abgeschickt worden sind, um eine empfangene Antwort-Datensequenz zu erhalten; und
einer Bestimmungseinrichtung (18) zum Bestimmen des Transpondertyps des Transponders, von dem die empfangene Antwort-Datensequenz stammt, durch Auswerten der empfangenen Antwort-Datensequenz, wobei die Bestimmungseinrichtung (18) eine Vergleichseinrichtung zum Vergleichen der empfangenen Antwort-Datensequenz mit der in dem Empfangsspeicher (16) gespeicherten erwarteten Antwort-Datensequenz aufweist, und wobei die Bestimmungseinrichtung angeordnet ist, um bei Übereinstimmung zwischen der empfangenen Antwort-Datensequenz und der erwarteten Antwort-Datensequenz den Transponder, von dem die empfangene Antwort-Datensequenz stammt, als zu dem Transpondertyp gehörig zu identifizieren, dem die erwartete Antwort-Datensequenz zugeordnet ist.
wobei die Sendeeinrichtung (20) angeordnet ist, um nach der Sendung der Frage-Datensequenz für einen Transpondertyp eine Frage-Datensequenz für einen weiteren Transpondertyp dann zu senden, wenn keine Antwort-Datensequenz oder eine ungültige Antwort-Datensequenz auf die Frage-Datensequenz für den einen Transpondertyp von der Empfangseinrichtung (40) empfangen worden ist.

2. Vorrichtung gemäß Anspruch 1, bei der die Bestimmungseinrichtung (18) angeordnet ist, um einer weiteren Kommunikation mit dem Transponder, von dem die empfangene Antwort-Datensequenz stammt, das Datenübertragungsprotokoll des Transpondertyps zugrunde zu legen, zu dem der Transponder gehört.

3. Vorrichtung gemäß einem der vorhergehenden Ansprüche, bei der das erste Datenübertragungsprotokoll eine Frequenzmodulation umfaßt, und bei der das zweite Datenübertragungsprotokoll eine Amplitudenmodulation umfaßt, wobei die Sendeeinrichtung ferner folgende Merkmale aufweist:
eine Antenne (52) ;
einen FM-Modulator (22) ;
einen AM-Modulator (24) ; und
einen Kanalumschalter (32), um abhängig von dem bestimmten Datenübertragungsprotokoll den FM-Modulator (22) oder den AM-Modulator (24) mit der Antenne zu koppeln.

4. Vorrichtung gemäß einem der vorhergehenden Ansprüche, bei der beide Transpondertypen auf Signale ansprechen, die auf die gleiche Trägerfrequenz moduliert sind, mit folgendem Merkmal:
einem einzigen Modulationsoszillator (26) für die zumindest zwei Transpondertypen.

5. Vorrichtung gemäß einem der vorhergehenden Ansprüche, bei der die beiden Transpondertypen eine unterschiedliche Antennengüte erfordern, mit folgendem Merkmal:
einer Einrichtung (36, 54) zum Einstellen der Antennengüte ansprechend auf das bestimmte Datenübertragungsprotokoll.

6. Vorrichtung gemäß einem der vorhergehenden Ansprüche, bei der die Empfangseinrichtung (40) folgendes Merkmal aufweist:
einen Demodulator (44) zum Demodulieren eines Empfangssignals, das von einem Transponder abgeschickt worden ist, um die empfangene Antwort-Datensequenz zu erhalten.

7. Vorrichtung gemäß Anspruch 6, bei der die Empfangseinrichtung ferner folgende Merkmale aufweist:
einen Demodulator für jedes Datenübertragungsprotokoll; und
eine Auswähleinrichtung zum Auswählen des entsprechenden Demodulators für das bestimmte Datenübertragungsprotokoll.

8. Vorrichtung gemäß einem der vorhergehenden Ansprüche, die ferner folgendes Merkmal aufweist:
eine Antikollisionserkennungseinrichtung (50, 60c, 60d) zum Erkennen einer Kollision, wenn mehrere Transponder des gleichen Typs auf eine Frage-Datensequenz im wesentlichen parallel antworten.

9. Verfahren zum Auslesen und Beschreiben von Transpondern mindestens zweier Transpondertypen, denen unterschiedliche Datenübertragungsprotokolle zugeordnet sind, mit folgenden Schritten:
(a) Senden (20) einer Frage-Datensequenz, durch die eine Kommunikation mit einem Transponder des ersten Transpondertyps eingeleitet werden kann;
(b) Empfangen von Signalen, die von einem Transponder gesendet worden sind, um eine empfangene Antwort-Datensequenz zu erhalten;
(c) Vergleichen der empfangenen Antwort-Datensequenz mit einer von einem Transponder des ersten Transpondertyps erwarteten Antwort-Datensequenz;
(d) bei Übereinstimmung zwischen der empfangenen Antwort-Datensequenz und der erwarteten Antwort-Datensequenz, Kommunizieren mit dem Transponder über das Datenübertragungsprotokoll, das dem ersten Transpondertyp zugeordnet ist;
(e) bei Empfang keiner Antwort-Datensequenz oder bei Nichtübereinstimmung zwischen der empfangenen Antwort-Datensequenz und der erwarteten Datensequenz, Senden (20) einer Frage-Datensequenz, durch die eine Kommunikation mit einem Transponder des zweiten Transpondertyps eingeleitet werden kann;
(f) nach dem Schritt (e), Empfangen von Signalen, die von einem Transponder gesendet worden sind, um eine andere empfangene Antwort-Datensequenz zu erhalten;
(g) Vergleichen der anderen empfangenen Antwort-Datensequenz mit einer von einem Transponder des zweiten Transpondertyps erwarteten Antwort-Datensequenz; und
(h) bei Übereinstimmung zwischen der anderen empfangenen Antwort-Datensequenz und der für den zweiten Transpondertyp erwarteten Antwort-Datensequenz, Kommunizieren mit dem Transponder über das Datenübertragungsprotokoll, das dem zweiten Transpondertyp zugeordnet ist.

10. Verfahren gemäß Anspruch 9, bei dem mehrere Transponder des gleichen Typs auf eine Frage-Datensequenz antworten, die ferner vor den Schritten (b) bzw. (f) folgende Schritte aufweist:
Feststellen einer Kollision von zwei Transpondern des gleichen Transpondertyps; und
Auflösen (12) der Kollision, um mit jedem einzelnen der mehreren Transponder des gleichen Typs individuell kommunizieren zu können.

## Claims

1. Device (10) for reading from and writing onto transponders of at least two transponder types having different data transmission protocols associated with them, the device comprising:
a sending memory (14) for storing a query data sequence for each transponder type, by which sequence a communication with a transponder of the respective transponder type may be initiated;
a sending means (20) for sending the stored query data sequence for each transponder type;
a reception memory (16) for storing an response data sequence expected for each transponder type, that a transponder of a transponder type will send in response to the query data sequence associated with this type;
a reception means (40) for receiving signals having been sent by a transponder so as to obtain a response data sequence received; and
a determination means (18) for determining the transponder type of the transponder from which the response data sequence received originates by evaluating the response data sequence received, the determination means (18) having a comparison means for comparing the response data sequence received with the response data sequence expected stored in the reception memory (16), and the determination means being arranged so as to identify the transponder from which the response data sequence received originates as belonging to that transponder type with which the response data sequence expected is associated, in the event of a match between the response data sequence received and the response data sequence expected,
wherein the sending means (20) is arranged so as to send, after sending the query data sequence for a transponder type, a query data sequence for a further transponder type when no response data sequence or an invalid response data sequence has been received from the reception means (40) in response to the query data sequence for the one transponder type.

2. Device as claimed in claim 1, wherein the determination means (18) is arranged so as to base a further communication with the transponder from which the response data sequence received originates upon the data transmission protocol of that transponder type to which the transponder belongs.

3. Device as claimed in any of the preceding claims,
wherein the first data transmission protocol includes a frequency modulation, and wherein the second data transmission protocol includes an amplitude modulation, the sending means further comprising:
an antenna (52);
an FM modulator (22);
an AM modulator (24); and
a channel switching device (32) so as to couple the FM modulator (22) or the AM modulator (24) with the antenna dependent on the specific data transmission protocol.

4. Device as claimed in any of the preceding claims,
wherein both transponder types respond to signals modulated to the same carrier frequency, the device comprising:
a single modulation oscillator (26) for the at least two transponder types.

5. Device as claimed in any of the preceding claims,
wherein the two transponder types require different antenna quality factors, the device comprising:
means (36, 54) for adjusting the antenna quality factor such that it is responsive to the specific data transmission protocol.

6. Device as claimed in any of the preceding claims,
wherein the reception means (40) comprises:
a demodulator (44) for demodulating a reception signal sent by a transponder so as to obtain the response data sequence received.

7. Device as claimed in claim 6, wherein the reception means further comprises:
a demodulator for each data transmission protocol; and
a selection means for selecting the corresponding demodulator for the specific data transmission protocol.

8. Device as claimed in any of the preceding claims, further comprising:
an anti-collision detection means (50, 60c, 60d) for detecting a collision when several transponders of the same type respond essentially in parallel to a query data sequence.

9. Method of reading from and writing onto transponders of at least two transponder types having different data transmission protocols associated with them, the method comprising:
(a) sending (20) a query data sequence by which said one communication with a transponder of the first transponder type may be initiated;
(b) receiving signals having been sent by a transponder so as to obtain a response data sequence received;
(c) comparing the response data sequence received with a response data sequence expected from a transponder of the first transponder type;
(d) in the event of a match between the response data sequence received an the response data sequence expected, communicating with the transponder using the data transmission protocol associated with the first transponder type;
(e) in the event of no reception of a response data sequence or in the event of a non-match between the response data sequence received and the data sequence expected, sending (20) a query data sequence by which a communication with a transponder of the second transponder type may be initiated;
(f) following step (e), receiving signals having been sent by a transponder so as to obtain a different response data sequence received;
(g) comparing the other response data sequence received with a response data sequence expected from a transponder of the second transponder type; and
(h) in the event of a match between the other response data sequence received and the response data sequence expected for the second transponder type, communicating with the transponder using the data transmission protocol associated with the second transponder type.

10. Method as claimed in claim 9, wherein several transponders of the same type respond to a query data sequence, the method further comprising the following steps prior to steps (b) and (f), respectively:
ascertaining a collision of two transponders of the same transponder type; and
dispersing (12) the collision so as to be able to communicate individually with each single one of the several transponders of the same type.

## Revendications

1. Dispositif (10) pour lire et écrire des transpondeurs d'au moins deux types de transpondeurs auxquels sont associés des protocoles de transmission de données différents, aux caractéristiques suivantes :
une mémoire de transmission (14) destinée à mémoriser une séquence de données d'interrogation pour chaque type de transpondeurs par laquelle peut être introduite une communication avec un transpondeur du type de transpondeurs correspondant ;
un dispositif de transmission (20) destiné à envoyer la séquence de données d'interrogation mémorisée pour chaque type de transpondeurs ;
une mémoire de réception (16) destinée à mémoriser une séquence de données de réponse attendue pour chaque type de transpondeurs qu'un transpondeur d'un type de transpondeurs enverra selon l'attente en réaction à la séquence de données d'interrogation associée à ce type ;
un dispositif de réception (40) destiné à recevoir des signaux envoyés par un transpondeur, pour obtenir une séquence de données de réponse reçue; et
un dispositif de détermination (18) destiné à déterminer le type du transpondeur duquel provient la séquence de données de réponse reçue, le dispositif de détermination (18) présentant un dispositif de comparaison destiné à comparer la séquence de données de réponse reçue à la séquence de données de réponse attendue mémorisée dans la mémoire de réception (16) et le dispositif de détermination étant disposé de manière à identifier, en cas de coïncidence entre la séquence de données de réponse reçue et la séquence de données de réponse attendue, le transpondeur duquel provient la séquence de données de réponse reçue comme appartenant au type de transpondeurs auquel est associée la séquence de données de réponse attendue,
le dispositif de transmission (20) étant disposé de manière à envoyer, après l'envoi de la séquence de données d'interrogation pour un type de transpondeurs, une séquence de données d'interrogation pour un autre type de transpondeurs lorsqu'aucune séquence de données de réponse n'a été reçue ou qu'une séquence de données de réponse non valable à la séquence de données d'interrogation pour l'un type de transpondeurs a été reçue par le dispositif de réception (40).

2. Dispositif selon la revendication 1, dans lequel le dispositif de détermination (18) est disposé de manière à baser une autre communication avec le transpondeur duquel provient la séquence de données de réponse reçue sur le protocole de transmission de données du type de transpondeurs auquel appartient le transpondeur.

3. Dispositif selon l'une des revendications précédentes, dans lequel le premier protocole de transmission de données comporte une modulation de fréquence et dans lequel le second protocole de transmission de données comporte une modulation d'amplitude, le dispositif de transmission présentant, par ailleurs, les caractéristiques suivantes :
une antenne (52) ;
un modulateur FM (22) ;
un modulateur AM (24) ; et
un commutateur de canal (32) destiné à coupler, en fonction du protocole de transmission de données déterminé, le modulateur FM (22) ou le modulateur AM (24) à l'antenne.

4. Dispositif selon l'une ou l'autre des revendications précédentes, dans lequel les deux types de transpondeurs réagissent à des signaux modulés à la même fréquence de porteuse, à la caractéristique suivante :
un oscillateur de modulation unique (26) pour les au moins deux types de transpondeurs.

5. Dispositif selon l'une des revendications précédentes, dans lequel les deux types de transpondeurs requièrent une qualité d'antenne différente, à la caractéristique suivante :
un dispositif (46, 54) destiné à régler la qualité d'antenne sur le protocole de transmission de données déterminé.

6. Dispositif selon l'une des revendications précédentes, dans lequel le dispositif de réception (40) présente la caractéristique suivante :
un démodulateur (44) destiné à démoduler un signal de réception envoyé par un transpondeur, pour obtenir la séquence de données de réponse reçue.

7. Dispositif selon la revendication 6, dans lequel le dispositif de réception présente, par ailleurs, les caractéristiques suivantes :
un démodulateur pour chaque protocole de transmission de données ; et
un dispositif de sélection destiné à sélectionner le démodulateur correspondant pour le protocole de transmission de données déterminé.

8. Dispositif selon l'une des revendications précédentes, présentant, par ailleurs la caractéristique suivante :
un dispositif de reconnaissance anti-collision (50, 60c, 60d) destiné à reconnaître une collision lorsque plusieurs transpondeurs du même type répondent sensiblement en parallèle à une séquence de données d'interrogation.

9. Procédé pour lire et écrire des transpondeurs d'au moins deux types de transpondeurs auxquels sont associés des protocoles de transmission de données différents, aux étapes suivantes consistant à :
(a) envoyer (20) une séquence de données d'interrogation par laquelle peut être introduite une communication avec un transpondeur du premier type de transpondeurs ;
(b) recevoir des signaux envoyés par un transpondeur, pour obtenir une séquence de données de réponse reçue ;
(c) comparer la séquence de données de réponse reçue à la séquence de données de réponse attendue par un transpondeur du premier type de transpondeurs ;
(d) en cas de coïncidence entre la séquence de données de réponse reçue et la séquence de données de réponse attendue, communiquer avec le transpondeur par l'intermédiaire du protocole de transmission de données associé au premier type de transpondeurs ;
(e) s'il n'est pas reçu de séquence de données de réponse ou en cas de non-coïncidence entre la séquence de données de réponse reçue et la séquence de données attendue, envoyer (20) une séquence de données d'interrogation par laquelle peut être introduite une communication avec un transpondeur du second type de transpondeurs ;
(f) après l'étape (e), recevoir des signaux envoyés par un transpondeur, pour obtenir une autre séquence de données de réponse reçue ;
(g) comparer l'autre séquence de données de réponse reçue avec une séquence de données de réponse attendue d'un transpondeur du second type de transpondeurs ; et
(h) en cas de coïncidence entre l'autre séquence de données de réponse reçue et la séquence de données de réponse attendue pour le second type de transpondeurs, communiquer avec le transpondeur par l'intermédiaire du protocole de transmission de données associé au second type de transpondeurs.

10. Procédé selon la revendication 9, dans lequel plusieurs transpondeurs du même type répondent à une séquence de données d'interrogation, présentant, par ailleurs, avant les étapes (b) ou (f), les étapes suivantes consistant à:
constater une collision de deux transpondeurs du même type de transpondeurs ; et
éliminer (12) la collision, pour pouvoir communiquer individuellement avec chacun des plusieurs transpondeurs du même type.
